# EUROPÄISCHE PATENTSCHRIFT

(11) **EP 1 701 493 B1**
(45) Veröffentlichungstag und Bekanntmachung des Hinweises auf die Patenterteilung: **30.12.2015**
(21) Anmeldenummer: 06004775.0
(22) Anmeldetag: 08.03.2006
(51) Int. Cl.: H04L 12/58, G06Q 10/00

(54) **Verfahren und System für die Klassifikation von Auktionen betreffenden Emails**
Method and system for classifying emails relating to auctions
Système et procédé pour la classification de messages électroniques se rapportant à des ventes aux enchères.

(30) Priorität: 09.03.2005 DE 102005011169
(43) Veröffentlichungstag der Anmeldung: 13.09.2006
(73) Patentinhaber: 1&1 Internet AG, 56410 Montabaur (DE)
(72) Erfinder: Greve, Michael, 76227 Karlsruhe (DE); Anic, Tino, 76135 Karlsruhe (DE)
(74) Vertreter: DTS Patent- und Rechtsanwälte Schnekenbühl und Partner mbB

(56) Entgegenhaltungen:
- WO-A-99/65256
- WO-A-2004/034198
- US-A1- 2003 158 903
- ANONYMOUS: "Re: Hotmail filter" INTERNET ARTICLE, [Online] 30. Oktober 2001 (2001-10-30), XP002387320 Gefunden im Internet: URL:http://marc2.theaimsgroup.com/?l=ant-u ser&m=100447901802293&w=2> [gefunden am 2006-06-21]
- ANONYMOUS: "IBM LOTUS NOTES 6.5 FUER MACINTOSH" INTERNET ARTICLE, [Online] 2003, XP002387321 Gefunden im Internet: URL:ftp://ftp.software.ibm.com/software/em ea/de/lotus/DEU_Lotus-NotesMAC65.pdf> [gefunden am 2006-06-27]
- KEN YEE: "INTEGRATING AMAZON WEB SERVICES WITH YOUR NOTES DATABASES" INTERNET ARTICLE, [Online] 3. März 2003 (2003-03-03), XP002387322 Gefunden im Internet: URL:http://www-128.ibm.com/developerworks/ lotus/library/ls-AWS_integration/> [gefunden am 2006-06-27]

## Beschreibung

### Gebiet der Erfindung

Die Erfindung betrifft ein Verfahren und ein System zum Bereitstellen und Betreiben eines E-Mail-Dienstes, bei dem Internet-Nutzern jeweils ein Nutzer-Konto mit mehreren Ordnern zugeordnet wird, wobei der jeweilige Nutzer einen weiteren Internet-Dienst, insbesondere einen Auktions-Dienst, nutzt, welcher Informations-E-Mails an das Nutzer-Konto des E-Mail-Dienstes sendet.

### Hintergrund der Erfindung

Ein solcher E-Mail-Dienst wird z.B. von der Anmelderin im Internet unter der URL www.freemail.de angeboten. Die Nutzer können sich dort registrieren lassen und erhalten ein kostenloses Nutzer-Konto, um jederzeit per Browser auf das entsprechende'persönliche E-Mail-Postfach zugreifen zu können. Zu besseren Verwaltung des E-Mail-Postfaches sind bereits verschiedene Ordner, wie Posteingang, Postausgang, Entwürfe usw. angelegt. Für die eingehenden E-Mails ist ein Drei-Wege-Spam-Filter vorgesehen, der in der DE 10326092, einer jüngeren Anmeldung der Anmelderin, beschrieben ist und mit dem sehr effizient die nützlichen E-Mails von den störenden Spam-E-Mails getrennt werden können. Der Nutzer kann den Spam-Filter für seine Zwecke optimieren. Außerdem kann der Nutzer weitere Ordner nach seinen Wünschen anlegen und somit seine E-Mails noch besser verwalten.

Die Nutzer solcher E-Mail-Dienste sind oftmals noch für weitere Internet-Dienste registriert, wie z.B. für einen Auktions-Dienst, der an das Nutzer-Konto Informations-E-Mails schickt, um über aktuelle Ereignisse, Neuigkeiten und dergleichen zu informieren. So schickt z.B. der Internet-Auktions-Dienst Ebay, der unter der URL www.ebay.de erreichbar ist, an seine Nutzer die aktuellen Informationen über laufende Auktionen, an denen der jeweilige Nutzer beteiligt ist oder zumindest Interesse hat. Damit wird der Nutzer per E-Mail sofort über die neusten Ereignisse, insbesondere neue Gebote, Zuschläge und Auktionsende, informiert. Der Nutzer braucht dem Auktions-Dienst lediglich die E-Mail-Adresse seines Nutzer-Kontos beim E-Mail-Dienst anzugeben. Herkömmlicherweise gehen die Informations-E-Mails (Auktions-E-Mails) dann chronologisch beim E-Mail-Dienst auf dem angegebenen Nutzer-Konto ein und vermischen sich deshalb mit den anderen eingehenden E-Mails. Es liegt dann am Nutzer selbst durch Anlegen von separaten Ordnern und Vorgabe von Filterregeln die Auktions-E-Mails aus dem Posteingang ausfiltern und dem passenden Ordner zuweisen zu lassen. Der Nutzer muss eventuell die Filterregeln mehrmals ausprobieren und manuell ändern, bis eine zufriedenstellende Selektion erreicht wird. Dabei kann dennoch nicht ausgeschlossen werden, dass Spam-E-Mails, die sich als Auktions-E-Mail tarnen, ungefiltert den Posteingang passieren und als nützliche E-Mails eingeordnet werden. Zudem wird die Filterung und Einordnung von eingehenden Auktions-E-Mails besonders aufwendig, wenn der Nutzer sehr viele Auktionen überwacht und/oder wenn in einzelnen Auktionen sehr viele Ereignisse auftreten. Wünschenswert wären durch den E-Mail-Dienst bereit gestellte Funktionen, die dem Nutzer die Einordnung solcher E-Mails erheblich erleichtern.

In, ANONYMOUS: "Re:Hotmail filter" INTERNET ARTICLE, [online] 30. Oktober 2001 (2001-10-30), XP-002387320 Gefunden im Internet: URL:http://marc2.theaimsgroup.com/?I=ant-user&m=100447901802293&w=2>[gefunden am 2006-06-21] wird beschrieben einen Ordner zu erzeugen und einen Filter zu aktivieren.

Daher ist es Aufgabe der Erfindung, ein Verfahren und ein System der eingangs genannten Art vorzustellen, die dem Nutzer eine komfortable Möglichkeit zur Verwaltung und Überwachung von E-Mails bezüglich anderer Internet-Dienste, insbesondere von Informations- und/oder Benachrichtigungs-E-Mails von Auktions-Diensten, bieten.

Gelöst wird die Aufgabe durch ein Verfahren mit den Merkmalen nach Anspruch 1 sowie durch ein System mit den Merkmalen nach dem nebengeordneten Anspruch.

Durch diese Maßnahmen wird erreicht, dass für den Nutzer die eingehenden Informations-E-Mails sicher erkannt und automatisch eingeordnet werden. Dem Nutzer wird somit eine komfortable Grundfunktion zur Verfügung gestellt, die auch ohne Einsatz von persönlichen Filterregeln die E-Mails effizient sortiert.

Weitere Vorteile und bevorzugte Ausgestaltungen der Erfindung ergeben sich auch aus den Unteransprüchen:
Demnach ist es besonders vorteilhaft, wenn in dem Fall, dass der weitere Internet-Dienst die Informations-E-Mails über einen Server mit einer fest zugeordneten Internet-Adresse sendet, jeweils zwei Kriterien geprüft werden, nämlich erstens geprüft wird, ob eine für das Nutzer-Konto eingehende E-Mail die Absender-Adresse des Internet-Dienstes trägt und zweitens geprüft wird, ob diese E-Mail auch von dem Server mit dieser Internet-Adresse stammt. Durch diese zweifache Identifizierung wird besonders zuverlässig erkannt, ob es sich wirklich um eine Informations-E-Mail des Internet-Dienstes und nicht etwa um Spam handelt.

Es ist auch besonders vorteilhaft, wenn für den Fall, dass mindestens eine Filterregel zum Zuordnen der eingehenden E-Mails vom Nutzer vorgegeben wird, die jeweils eingehende E-Mail anhand dieser Filterregel geprüft wird und falls die Filterregel auf die eingehende E-Mail anwendbar ist, diese E-Mail nicht dem Dienste-Ordner zugewiesen wird, sondern einem der Ordner entsprechend der Filterregel zugewiesen wird. Das bedeutet, dass evtl. bestehende persönliche Filterregelungen Vorrang haben vor der automatischen Einordnung in den Dienste-Ordner. Der Nutzer wird also nicht vom System "bevormundet", sondern kann nach wie vor die von ihm gewünschten Filteregeln anwenden.

In diesem Zusammenhang ist es vorteilhaft, wenn die entsprechend der Filterregel dem Ordner zugewiesene E-Mail auch anhand der vorgebbaren Kriterien geprüft wird und wenn, falls das Kriterium zutrifft, diese E-Mail als eine dem Dienste-Ordner zuweisbare E-Mail markiert wird. Somit werden die als Informations-E-Mails erkannten E-Mails - soweit es möglich ist- dem Dienste-Ordner zugeordnet oder -falls Filterregeln bestehen- zumindest markiert, so dass alle erkannten E-Mails einheitlich als Informations-E-Mails verwaltet werden können. Dabei ist es besonders von Vorteil, wenn die dem Dienste-Ordner zugewiesenen E-Mails und die als dem Dienste-Ordner zuweisbar markierten E-Mails in einer gemeinsamen Ansicht dem Nutzer angezeigt werden.

Ein weiterer Vorteil ergibt sich, wenn die von dem Internet-Dienst eingehenden E-Mails sich auf verschiedene Ereignisse, insbesondere auf die vom dem Dienst durchgeführten Auktionen, beziehen, und wenn die vom dem Internet-Dienst eingehenden E-Mails entsprechend der Ereignisse gruppiert werden und dem Nutzer in einer entsprechenden Ansicht, insbesondere in Form von Threads, angezeigt werden. In diesem Zusammenhang ist es besonders vorteilhaft, wenn für die verschiedenen Ereignisse, insbesondere für die verschiedenen Auktionen, jeweils zumindest eine Information von dem Internet-Dienst abgefragt wird und in der Ansicht dem Nutzer angezeigt wird. Dadurch wird eine besonders übersichtliche Anzeige der wichtigsten Informationen erreicht.

In diesem Zusammenhang ist es von Vorteil, wenn für den Nutzer in dem E-Mail-Dienst eine Suchfunktion bereit gestellt wird, und wenn für eine Suche einzelner E-Mails die gruppierten Informations-E-Mails nach den abgefragten Informationen indiziert werden. Damit erhält der Nutzer die Möglichkeit nicht nur in den E-Mail-Daten (header und body) zu suchen, sondern auch in Informationen, die nicht zur eigentlichen E-Mail gehören, die aber mit ihr in Bezug stehen. Am Beispiel von Auktions-E-Mails bedeutet dies, dass der Nutzer auch in den Artikelbezeichnungen und - nummern suchen kann, um die E-Mails zu einer bestimmten Auktion zu finden.

Von Vorteil ist auch eine Benachrichtigungsfunktion, die für den Nutzer in dem E-Mail-Dienst bereit gestellt wird, insbesondere eine Mobilfunk-Benachrichtigungsfunktion mittels Kurznachrichten, bei der der Nutzer bei Eingang einer Informations-E-Mail benachrichtigt wird, indem auch die zu dem Ereignis, auf das sich die jeweilige E-Mail bezieht, die abgefragten Informationen (also z.B. Artikelbezeichnung und -nummer) zumindest in Teilen mit gesendet werden. Somit kann der Nutzer schnell und effektiv per SMS über seine laufenden Auktionen informiert werden.

Bevorzugt wird für den Fall, dass von dem Nutzer eine einzelne E-Mail, die sich auf eines der Ereignisse bezieht, gelesen wird, eine erste Übersicht über die anderen E-Mails angezeigt, die sich auch auf dieses Ereignis beziehen.

Auch kann bevorzugt für den Nutzer eine manuelle Zuweisungsfunktion bereit gestellt werden, mit der die nicht in der Ansicht angezeigten E-Mails manuell einem der bereits erfassten Ereignisse zugewiesen werden können, wobei dem Nutzer eine zweite Übersicht angezeigt wird, in der die erfassten Ereignisse aufgelistet werden.

Diese und weitere Vorteile werden noch deutlicher in der nachfolgenden Beschreibung konkreter Ausführungen der Erfindung.

### Beschreibung bevorzugter Ausführungsbeispiele

Die vorliegende Erfindung wird nun anhand der folgenden Figuren erläutert und näher beschrieben:
Fig. 1 zeigt für ein erfindungsgemäßes E-Mail-System die prinzipielle Darstellung einer Ordner-Struktur;
Fig. 2 zeigt für ein bestimmtes Nutzer-Konto die Ansicht "Meine Auktionen" mit einer kompakten Übersicht über alle Auktions-E-Mails im Bereich "Kaufen";
Fig. 3 zeigt zu der Ansicht "Meine Auktionen" (Bereich "Kaufen") den Aufbau eines geöffneten Threads zu einer bestimmten Auktion mit der Auflistung der zugehörigen Auktions-E-Mails;
Fig. 4 zeigt die Darstellung zum Lesen einer Auktions-E-Mail mit einer zugehörigen Auflistung aller E-Mails, die sich auf dieselbe Auktion beziehen;
Fig. 5 zeigt eine Seite zum manuellen Anlegen von neuen Auktionen und/oder Zuweisen von Nachrichten zu bestehenden Auktionen; und
Fig. 6 zeigt das Ablauf-Diagramm eines erfindungsgemäßen Verfahrens.

Bevor die Ausführungsbeispiele eingehend beschrieben werden, werden hier zunächst einige der in der Beschreibung verwendeten Begriffe näher erläutert:
Mit "Auktionsmanager" wird die erfindungsgemäße Lösung bezeichnet, die eine automatische systemgesteuerte Zuordnung, Verwaltung und nutzerfreundliche Aufbereitung von empfangenen elektronischen Nachrichten (E-Mails) bewirkt und insbesondere im Zusammenhang mit Online-Auktionen vorteilhaft eingesetzt werden kann.

Grundsätzlich erkennt das System die neu eingehenden Nachrichten, welche mit Auktionen zusammenhängen und legt diese erkannten bzw. identifizierten Nachrichten im Ordner "Auktionsarchiv" ab. Diese vom System erkannten Nachrichten werden nachfolgend auch kurz "Auktions-E-Mails" genannt.

Das Auktionsarchiv ist also Ordner, in den die Auktions-E-Mails vom Auktionsmanager automatisch verschoben werden. Dies geschieht jedoch nur dann, wenn keine vom Nutzer bestimmten Filterregeln eine andere Zuordnung vorsehen. Somit verbleiben evtl. auch Auktions-E-Mails in den vom Nutzer dafür vorgesehenen Ordnern.

Alle Auktions-E-Mails werden in einer einheitlichen Anzeige "Meine Auktionen" dargestellt. "Meine Auktionen" ist also eine übergeordnete Ansicht (sog. View) und zudem auch der Oberbegriff für die Ansichten "Kaufen", "Verkaufen" und "Sonstige".

Die Funktion des Auktionsmanagers kann vom Nutzer ein- und ausgeschaltet werden. Der Nutzer kann bei eingeschalteter Funktion auf Knopfdruck automatisch alle Auktions-E-Mails in seinem Postfach identifizieren und in das "Auktionsarchiv" verschieben lassen. Wird die Funktion abgeschaltet, bleibt der "Auktionsarchiv"-Ordner samt Inhalt bestehen. Jedoch werden dann Nachrichten nicht mehr als Auktions-E-Mails markiert und "Meine Auktionen"-Views stehen nicht mehr zur Verfügung.

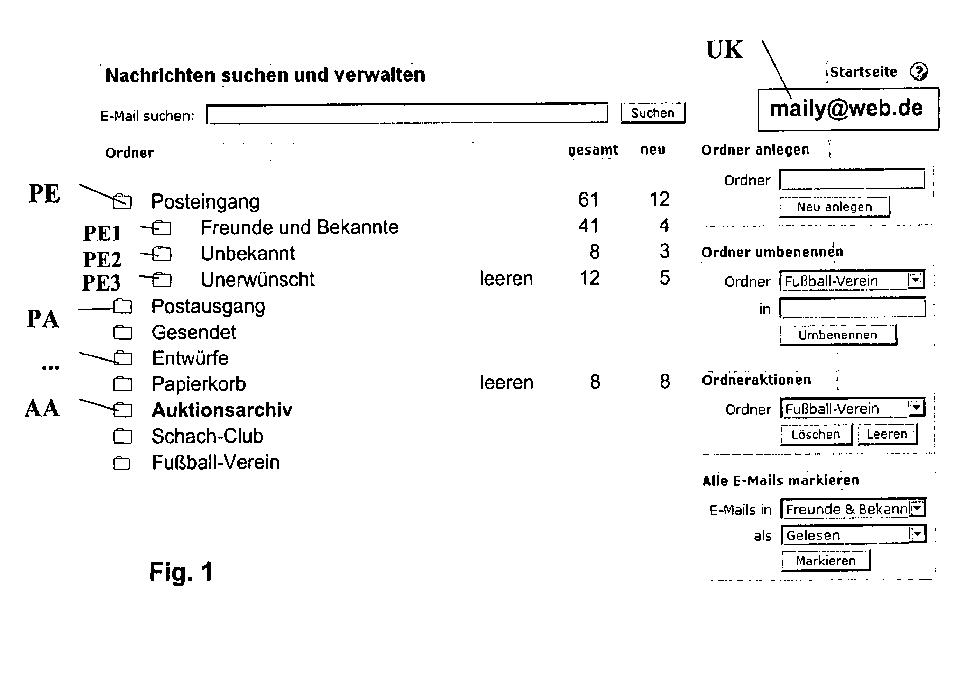

In der Figur 1 ist am Beispiel eines Nutzer-Kontos UK mit der E-Mail-Adresse "maily@web.de" die Übersicht über die im System eingerichteten E-Mail-Ordner dargestellt. Es gibt Ordner (sog. System-Ordner), die vom System bereits fest eingerichtet sind, wie z.B. den Ordner PE "Posteingang" mit den Unterordnern PE1 bis PE3 und den Ordner PA "Postausgang" usw.. Der erste Unterordner PE1 "Freunde und Bekannte" enthält Nachrichten von bekannten Absendern, der zweite PE2 "Unbekannt" enthält Nachrichten von unbekannten Absendern und der dritte PE3 "Unerwünscht" umfasst Nachrichten von unerwünschten Absendern, insbesondere Spam-Nachrichten.

Neben den System-Ordnern gibt es auch persönliche Ordner, die der Nutzer selbst einrichten kann, wie z.B. einen Ordner "Schach-Club" oder "Fußball-Verein".

Erfindungsgemäß wird nun vom System ein weiterer Ordner eingerichtet, nämlich für das genannte "Auktionsarchiv" ein Ordner AA, in den das System die identifizierten Auktions-E-Mails einordnet, sofern keine Filterregel eine andere Zuordnung bestimmt. Beispielsweise könnte der Nutzer eine Filterregel definiert haben, gemäß der alle eingehenden E-Mails, die im E-Mail-Kopf (Header) den Begriff "Fußball" haben, automatisch in den persönlichen Ordner "Fußball-Verein" eingeordnet werden. In diesem Fall würden auch solche Auktions-E-Mails, die "Fußball" im Header enthalten, von der Filterregel erfasst und nicht im "Auktionsarchiv" landen, sondern dem persönlichen Ordner "Fußball-Verein" zugewiesen werden. Das System richtet sich also vorrangig nach den evtl. vom Nutzer vorgegebenen Einstellungen und Filterregeln.

Der Ordner "Auktionsarchiv" ist vorzugsweise ein Systemordner und kann deshalb nicht in den Pulldowns "Ordner umbenennen" und "Ordneraktionen" ausgewählt werden.

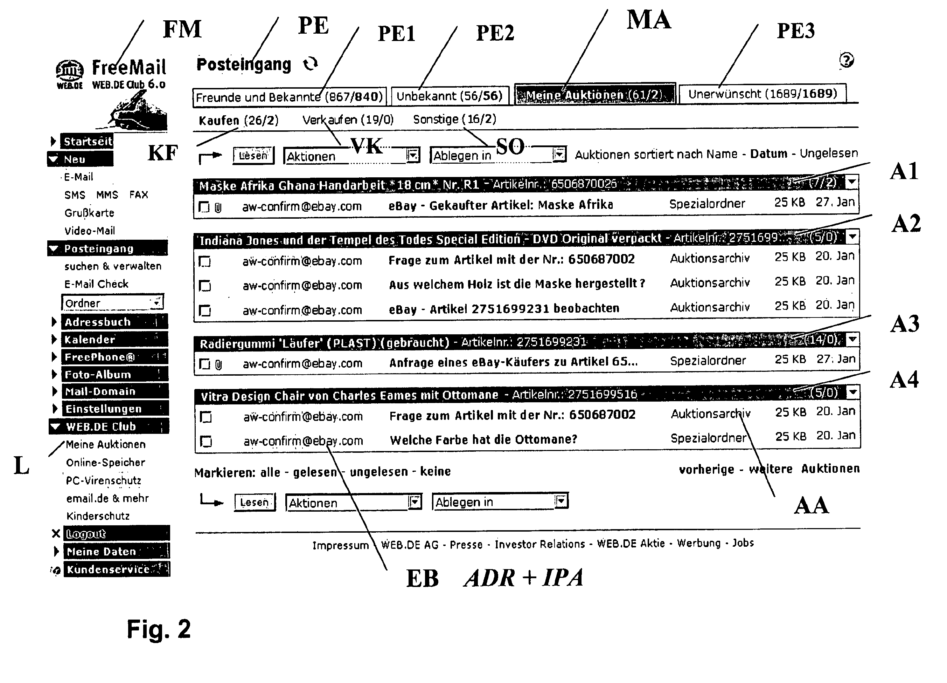

Die Figur 2 gibt nun für den E-Mail-Dienst FM und das darin eingerichtete Nutzer-Konto "maily@web.de" die Darstellung des Posteingangs PE genauer wieder:
Die Funktion "Auktionsmanager", mit der die eingehenden Auktions-E-Mails automatisch in den Ordner AA "Auktionsarchiv" verschoben werden können, kann vom Nutzer über die Einstellungen innerhalb seines Nutzer-Profils jederzeit ein- und ausgeschaltet werden.

Ist nun die Funktion "Auktions-Manager" aktiviert, so wird in der Navigationsleiste" der Menüpunkt "Meine Auktionen" angezeigt (s. links unterhalb "WEB.DE Club"). Beim Anklicken dieses Links "Meine Auktionen" wird die gezeigte Darstellung angezeigt, die mit einer Navigations-Zeile mit mehreren Reitern PE1, PE2, PE2 und MA versehen ist:
Die Reiter PE1 bis PE3 beziehen sich auf die genannten Unterordner des Posteingangs PE, nämlich auf "Freunde und Bekannte", Unbekannt" bzw. "Unerwünscht" (vergl. Fig.1). Der Reiter MA bezieht sich jedoch nicht auf einen Ordner, sondern auf eine Ansicht "Meine Auktionen", in der alle Auktions-E-Mails erscheinen. Im Vergleich zu einem Ordner, der einem logischen Speicherplatz für bestimmte E-Mails entspricht, ist eine Ansicht eine zusammenfassende Darstellung oder Anzeige von mehreren E-Mails, die in verschiedenen Ordnern gespeichert sein können. Die Ansicht MA "Meine Auktionen" hat weitere mit den Reitern KF, VK und SO bezeichnete Unteransichten, nämlich "Kaufen", "Verkaufen" und "Sonstige", um die E-Mails unter dem jeweiligen Aspekt anzuzeigen.

Beim aktivierten Auktionsmanager und Anklicken des Links L "Meine Auktionen" wird der Nutzer direkt zur Unteransicht "Kaufen" unterhalb der Ansicht "Meine Auktionen" geführt. Bei deaktiviertem "Auktions-Manager" wird der Menüpunkt "Meine Auktionen" nicht angezeigt, sondern gegen einen Menüpunkt "Auktionsmanager" ausgetauscht. Dieser Link führt dann auf die Einstellungsseite des Auktions-Managers (nicht dargestellt).

Ist (wie hier in der Figur 2 dargestellt) der Auktionsmanager aktiviert, so wird in der Navigations-Zeile zwischen dem Reiter PE2 "Unbekannt" und dem Reiter PE3 "Unerwünscht" der Reiter MA für die Ansicht "Meine Auktionen" angezeigt. Der Reiter MA umfasst auch eine Statusanzeige mit zwei Ziffern, von denen die erste die Anzahl aller Auktions-E-Mails angibt und die zweite die Anzahl der ungelesenen Auktions-E-Mails angibt. Im dargestellten Beispiel stehen auf dem Reiter MA "Meine Auktionen" in Klammern die Zahlen "61/2", wodurch angezeigt wird, dass insgesamt 61 Auktions-E-Mails vorliegen, von denen 2 noch ungelesen sind. Das System erkennt diese E-Mails an der Absender-Adresse ADR "..ebay.com" und zusätzlich an der Internet-Adresse (sog. IP-Adresse) IPA des Servers des Internet-Dienstes EB (hier Auktionsdienst Ebay).

Unterhalb der zweiten Reiterebene mit den Bereichen "Kaufen", Verkaufen" und "Sonstige" befindet sich eine Funktionszeile. Sie beginnt links mit einem abgewinkeltem Pfeil gefolgt von einem "Lesen"-Button, einem "Aktionen"-Pulldown und einem "Ablegen in"-Pulldown. Die Funktionen werden für die vom Nutzer markierten E-Mails durchgeführt. Dazu stehen Checkboxen zur Verfügung. Das "Aktionen"-Pulldown erhält die zusätzlichen Einträge "keine Auktionsnachricht" und "anderer Auktion hinzufügen" (nicht dargestellt). Wird der Eintrag "keine Auktionsnachricht" ausgewählt, so wird der Nachricht ein zusätzliches Attribut gesetzt, damit sie nicht erneut in den Ansichten (Views) angezeigt wird. Der Nutzer erhält die Bestätigung "Nachricht aus >Meine Auktionen< entfernen war erfolgreich!". In derselben View-Anzeige wird die jetzt besagte Nachricht nicht mehr aufführt. Wird der Eintrag "anderer Auktion hinzufügen" ausgewählt, kann der Nutzer auf der Folgeseite die Nachricht einer anderen bestehenden Auktion hinzufügen oder eine neue Auktion anlegen und die Nachricht dieser - statt der bisherigen - zuweisen. Das "Ablegen in" -Pulldown erhält auch einen Eintrag "Auktionsarchiv". Wird dieser Eintrag ausgewählt, so wird die E-Mail in den Ordner "Auktionsarchiv" verschoben - falls sie nicht bereits dort abgelegt ist. Der Nutzer erhält die Bestätigung "Verschieben nach Ordner Auktionsarchiv erfolgreich!" in derselben View-Seite, auf der dann bei der verschobenen E-Mail der neue Speicherort angezeigt wird.

Verschiebt der Nutzer eine Auktions-E-Mail in einen anderen Ordner als "Auktionsarchiv", so wird er auf der Folgeseite informiert, dass die Nachricht dann nicht mehr in "Meine Auktionen" angezeigt wird. Nur wenn er dies auf dieser Seite bestätigt, wird die Auktions-E-Mail in den ausgewählten Ordner verschoben und erhält eine Markierung, welche die Anzeige in den views zukünftig unterbindet.

Die Markierungsaktionen "alle" - "gelesen" - "ungelesen" - "keine" beziehen sich nur auf die sichtbaren Nachrichten, die per Checkbox ausgewählt wurden. Auktions-E-Mails, die bei geschlossenem oder halb-offenem Thread nicht angezeigt werden, sind vom Markieren ausgeschlossen.

Die Anzeige der Auktions-E-Mails erfolgt in Form von sortierten Zusammenfassungen bzw. thematischen Gruppierungen, die hier als "Auktions-Threads" bezeichnet werden. In der Fig. 2 sind beispielhaft vier Threads A1, A2, A3 und A4 dargestellt. Jeder Thread steht für ein Ereignis, also für eine bestimmte Auktion. Das bedeutet, dass die E-Mails unter der Bezeichnung der jeweiligen Auktion A1, A2, A3 oder A4 gruppiert aufgelistet sind. Der Nutzer kann über "Auktion sortiert nach" die Reihenfolge der angezeigten Threads mit verschiedenen (hier mit drei) Textlinks per Mausklick beeinflussen:
Bei "Ungelesen" werden zuerst Threads angezeigt, die ungelesene Nachrichten enthalten, darunter folgen die Threads ohne neue Nachrichten. Innerhalb der beiden Gruppen werden die Nachrichten nach Datum der jeweils aktuellsten Nachricht sortiert. Dies entspricht der Standardeinstellung bei Aufruf der Ansichten "Kaufen" und "Verkaufen".

Mit dem Textlink "Datum" werden die Threads untereinander nach der jeweils aktuellsten Nachricht chronologisch sortiert. Mit einem Klick auf "Name" lässt das System die Threads in alphabetischer Reihenfolge der Artikelbeschreibung anzeigen.

Wie anhand der Fig. 2 zu sehen ist sind in den Threads zu den dort aufgelisteten Auktions-E-Mails jeweils auch die Ordner angegeben, in denen die jeweilige E-Mail gespeichert ist. Demnach befinden sich einige der Auktions-E-Mails in dem Dienste-Ordner AA, also im sog. "Auktionsarchiv", weil sie dort automatisch vom System eingeordnet worden sind. Andere E-Mails hingegen befinden sich in einem "Spezialordner", weil sie entsprechend einer Filterregel dort einsortiert worden sind.

Der in der Fig. 2 gezeigte "Kaufen"-View entspricht in den wesentlichen Elementen und Funktionalitäten auch dem "Verkaufen"-View. Die beiden Views unterscheiden sich nur inhaltlich dadurch, dass die jeweils gezeigten Auktions-Mails sich auf Kauf- bzw. Verkaufsvorgänge beziehen.

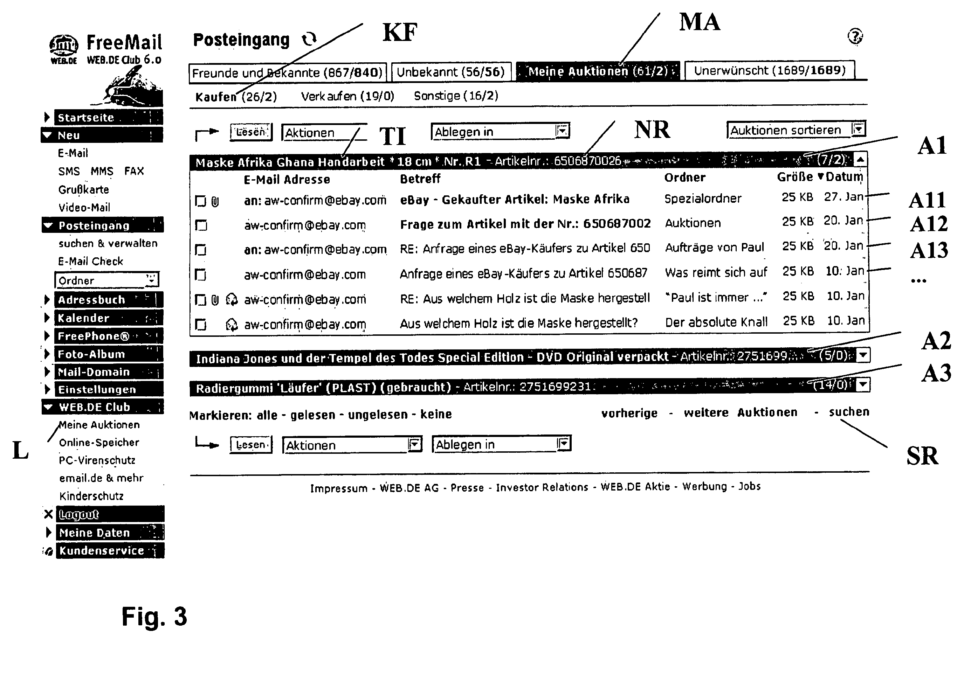

Die nun anhand der Figur 3 folgende Beschreibung für den "Kaufen"-View bezieht sich deshalb gleichermaßen auch auf den "Verkaufen"-View, der hier nicht weiter beschrieben werden braucht.

Die Kopfzeile (headline) der Seite beinhaltet weiterhin die Überschrift "Posteingang". Daneben steht das "Refresh"-Symbol, das bei Mouse-Over eine Animation anzeigt. Wird das "Refresh"-Symbol geklickt, wird eine Aktualisierung der Ansichten (Refresh der Views) vollzogen und beinhaltet dann auch Nachrichten, die seit dem letzten Refresh empfangen wurden.

Wie auch in der Figur 3 zu sehen ist, ist der Reiter "Kaufen" in der zweiten Ebene hervorgehoben. Sind im Postfach keine Auktions-E-Mails vorhanden, die dem "Kaufen"-View zugeordnet werden können, steht unterhalb der zweiten Reiterebene ein Hinweis-Text, wie z.B. "Es liegen keine Auktionsnachrichten in >Kaufen< vor.".

Wie anhand der Figuren 2 und 3 zu erkennen ist, werden innerhalb der jeweiligen Ansicht (View) alle Auktions-E-Mails, die zur selben Auktion gehören, in einem sog. Thread zusammengefasst. Das bedeutet, dass alle Nachrichten (wie z.B. A11, A12, A13 usw.) die zu derselben Auktion (nämlich A1) gehören, zusammen in einem Strang dargestellt werden. Mit Hilfe dieser Anzeigeform behält der Nutzer den "roten Faden" über alle seine Auktionen. Ein View kann quasi aus unendlich vielen Threads bestehen. Die Threads A1, A2, A3 usw. werden vorzugsweise durch einen festen Abstand voneinander getrennt dargestellt, wobei eine vorgebbare Reihenfolge bzw. Rangfolge berücksichtigt wird:
Zuerst werden die Threads angezeigt, die ungelesene Nachrichten enthalten. Untereinander werden diese nach der jeweils aktuellsten Nachricht sortiert. Darauf folgen die Threads ohne ungelesene Nachrichten. Auch diese sind untereinander nach der jeweils aktuellsten Nachricht sortiert. Diese Art der Sortierung der Threads entspricht vorzugsweise der Standardeinstellung des Systems. Andere Sortierungen sind denkbar. So können z.B. die Auktionen auch nach Datum der jeweils neuesten Nachricht oder alphabetisch nach Artikelbeschreibung Nutzer sortiert werden. Das geschieht vorzugsweise nach den vom Nutzer per Mausklick bestimmten Sortierkriterien, wie z.B. Gelesen/Ungelesen, Betreff, Datum usw.

Die Threads können in verschiedenen Zuständen angezeigt werden, hier z.B. in den folgenden drei Varianten, wobei systemgesteuert und/oder durch Mausklick auf ein PfeilSymbol zwischen den Zuständen gewechselt werden kann. Folgende drei Threads sind hier vorgesehen:
a) Geschlossener Thread (Der Pfeil zeigt nach unten. Siehe A2 oder A3):
   Enthält ein Thread keine ungelesenen Nachrichten, wird er standardmäßig geschlossen angezeigt. Das bedeutet, dass nur die Thread-Headline mit Angabe der Bezeichnung TI und der Artikelnummer NR sichtbar ist.
b) Halb-offener Thread (Pfeil nach unten):
   Enthält ein Thread ungelesene Nachrichten, wird die Headline mit einer Thread-Liste angezeigt, wobei in der Thread-Liste nur die Zeilen für die ungelesenen Nachrichten angezeigt werden. Diese sind vorzugsweise untereinander chronologisch sortiert.
c) Offener Thread (Pfeil nach oben. Siehe A1:)
Nur durch Mausklick auf eine Thread-Headline bei einem der obigen Zustände öffnet sich der Thread ganz. Nur in diesem Zustand wird die Zeile mit den Spaltenüberschriften angezeigt und die Thread-Liste zeigt Zeilen zu allen Nachrichten dieser Auktion. Wird ein Thread ganz geöffnet, werden vorzugsweise keine oder nur sehr wenige weitere Threads angezeigt. Diese sind über den "nächste
Auktionen"-Link erreichbar, wo sie im geschlossenen bzw. halb offenem Zustand angezeigt werden. Ein ganz offener Thread, wie der von der Auktion A1, kann durch Mausklick auf die Thread-Headline manuell wieder geschlossen werden:
   Sind im Thread weiterhin ungelesene Nachrichten enthalten, geht es zurück in Zustand "halb-offener Thread. Sind aber keine ungelesenen Nachrichten enthalten, so wechselt das System automatisch in den Zustand "geschlossener Thread". Der Thread wird dann wieder mit den anderen Threads angezeigt und ist nach der eingestellten Sortierung eingereiht.

Alternativ oder ergänzend zum "Kaufen-View" und "Verkaufen-View" kann auch ein "Auktionen"-View eingerichtet werden. Darin können dann alle als Auktions-Mails markierten Nachrichten unabhängig von ihrer Zuordnungsmöglichkeit zu "Kaufen" oder "Verkaufen" in einer einheitlichen Übersicht angezeigt werden. Der Nutzer kann die Aufteilung und Unterteilung der Ansichten (Views) auch modifizieren und sich für die bevorzugten Ansichten entscheiden. Ebenso kann das System nach Vorgaben des Nutzers über die Ansichten entscheiden.

Fällt die Entscheidung gegen getrennte Views zu "Kaufen" und "Verkaufen", weil viele Nachrichten zwar einer Auktion zugeordnet werden können, aber nicht "Kaufen" oder "Verkaufen", wird statt dessen der View "Auktionen" angeboten. Dieser View unterscheidet sich von den "Kaufen"- und "Verkaufen"-Views nur darin, dass er alle Nachrichten beider Views enthält.

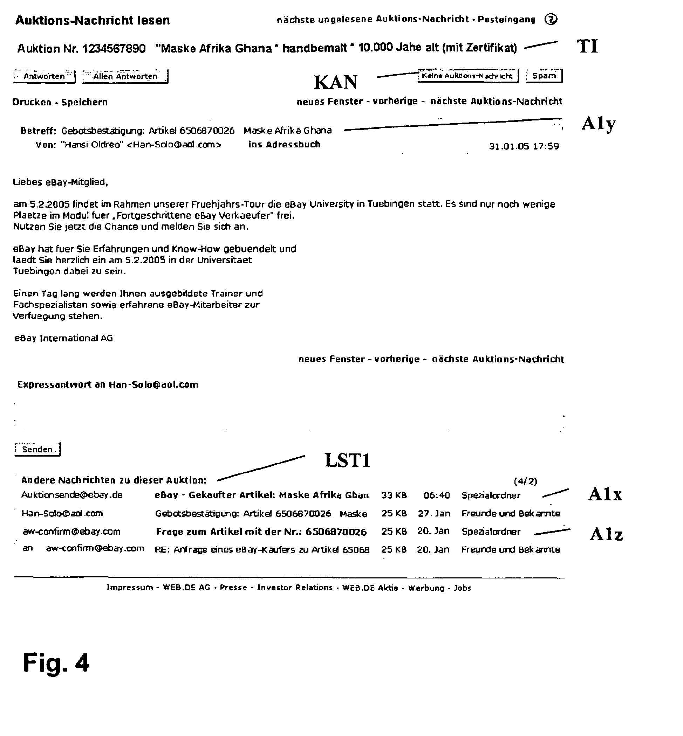

Die Figur 4 zeigt die Darstellung der Seite "Auktions-Nachrichten lesen", die im Vergleich zu einer herkömmlichen Lesen-Seite erweitert ist:
Der Nutzer gelangt zu der Seite "Auktions-Nachrichten lesen", wenn er z.B. in der Ansicht "Meine Auktionen" (s. Fig. 1 oder 2) eine bestimmte Auktions-E-Mail anklickt. In dem hier in der Fig. 4 dargestellten Beispiel hat der Nutzer die E-Mail Aly angeklickt, die zu der Auktion A1 "Maske Afrika Ghana" gehört.

In der Kopfzeile (Headline) der Seite steht linksbündig "Auktionsnachricht lesen". Am Ende der Headline steht u.a. das Hilfe-Symbol. Unterhalb der Headline wird die Bezeichnung bzw. der Titel TI der Auktion angezeigt. Diese Information stammt nicht aus der E-Mail selbst und entspricht insbesondere nicht dem Betreff der E-Mail, sondern stellt eine übergeordnete Information dar, die von dem Internet-Dienst (hier vom Auktions-Dienst Ebay) vorzugsweise per http-Zugriff abgefragt wurde. Es handelt sich dabei um die Bezeichnung der Auktion, so wie sie in dem bekannten Auktionsdienst Ebay eingestellt ist. Außerdem wird noch die Artikel-Nummer angezeigt. Damit hat der Nutzer zusätzlich zur eigentlichen E-Mail auch die übergeordnete Information zu dem entsprechenden Ereignis, nämlich zu der Auktion "Maske Afrika...", auf die sich diese E-Mail bezieht.

Nach der Headline folgt eine Zeile mit Buttons "Antworten", "Allen Antworten" und ggf. "Weiterleiten" (nicht dargestellt), mit denen die an sich bekannten E-Mail-Funktionen ausgelöst werden können.

Außerdem sind noch neue Buttons "keine Auktionsnachricht" und "Spam" vorgesehen, mit denen die angezeigte E-Mail, die ja als Auktions-Nachricht identifiziert worden ist, manuell mit einer anderen Zuordnung versehen werden kann. Der Nutzer (User) kann also mit einem Mausklick bestimmen, dass die angezeigte E-Mail doch keine "Auktions-E-Mail" ist, sondern eine andere (normale) E-Mail oder eine Spam-E-Mail ist.

Klickt der User auf den Button KAN "keine Auktionsnachricht", so wird die Nachricht mit einem entsprechendem Attribut versehen, damit sie nicht erneut in den Auktions-Views angezeigt wird. Falls die Nachricht im "Auktionsarchiv" abgelegt ist, wird sie automatisch in den Ordner "Freunde und Bekannte" verschoben. Der Nutzer erhält dann auf der "Nachricht lesen"-Seite, die noch immer dieselbe E-Mail anzeigt, die Bestätigung "Nachricht aus >Meine Auktionen< entfernen war erfolgreich!" bzw. "Nachricht aus >Meine Auktionen< entfernen und in >Freunde und Bekannte< verschoben war erfolgreich!"

In der Headline steht dann statt dem Link "Meine Auktionen" der Link "Posteingang".

Bestimmt der User, dass die Nachricht keine Auktions-E-Mail ist, so sollte sie nicht im "Auktionsarchiv" verbleiben. Da der User aber nicht den Button "Spam" benutzt hat, wird davon ausgegangen, dass die Nachricht trotzdem für ihn von Interesse ist. Deshalb wird diese Nachricht in "Freunde und Bekannte" abgelegt.

Unterhalb der Buttonzeile wird eine Funktionszeile bzw. Sprungzeile dargestellt: Dort können Funktionen wie "Drucken" und "Speichern" aktiviert werden. Außerdem können durch Textlinks repräsentierte Sprungziele angeboten werden, nämlich "neues Fenster", "vorherige" und "nächste Auktionsnachricht". Beim Anklicken springt die Darstellung zu dem entsprechenden Ziel.

Nach dieser Zeile folgt die eigentliche E-Mail Aly mit Header und Body. Anschließend wird ein Eingabe-Fenster "Expressantwort..." angezeigt, wo der User sofort eine Antwort auf die E-Mail eingeben und diese mit einem Klick zurück an den Absender schicken kann.

Ein besonders vorteilhafter Zusatz in der Darstellung der "Lesen-Seite" besteht in einer im unteren Teil der Seite angeordneten Übersichts-Anzeige. Dabei handelt es sich vorzugsweise um eine Liste LST1, die alle E-Mails angibt, welche sich ebenfalls auf die aktuelle Auktion (hier auf "Maske Afrika...") beziehen. Der Nutzer erhält also eine Übersicht zu allen Auktions-E-Mails des aktuellen Threads.

Die Reihenfolge bzw. Rangordnung kann entsprechend der Ansicht "Meine Auktionen" bestehen bleiben. Im gezeigten Beispiel umfasst die Liste LST1 u.a. die neuste (ungelesene) E-Mail Alx, gefolgt von der nächsten E-Mail Aly, die momentan gelesen wird. Danach folgen die nächsten E-Mails aus diesem Thread, von den hier beispielhaft eine mit Alz bezeichnet ist.

Es wird also vorzugsweise nur der Thread zu der Auktion angezeigt, auf die sich auch die gerade geöffnete A-Mail bezieht. Der Aufbau des Threads entspricht einem Thread aus dem "Kaufen"-View (s. Fig. 1 und 2) im ganz offenen Zustand. Er unterscheidet sich nur darin, dass die Checkboxen nicht angezeigt werden und die Zeile der gerade gelesenen Nachricht nicht verlinkt und der Subject-Text nicht durch fette Schrift hervorgehoben ist.

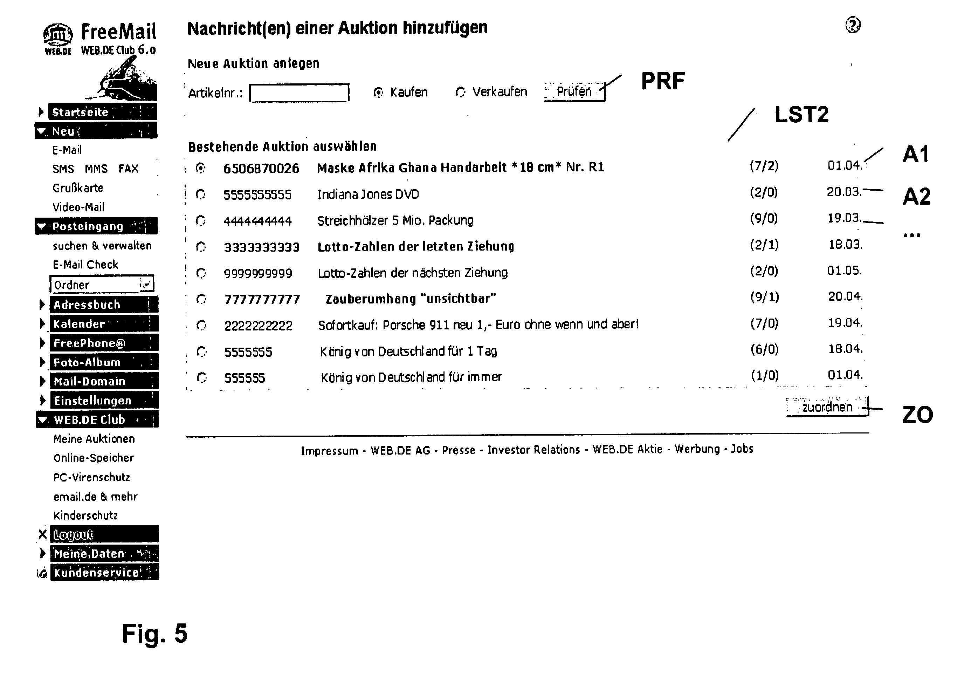

In der Figur 5 ist die Seite "Nachricht(en) einer Auktion hinzufügen" dargestellt. Diese Seite dient zum manuellen Zuweisen von nicht erkannten Auktions-E-Mails zu einer Auktion und damit auch zur Ansicht "Meine Auktionen".

Mit Hilfe dieser Seite kann der Nutzer eine Nachricht einer seinem Postfach bekannten Auktion zuweisen oder eine neue Auktion anlegen und die Nachricht dieser zuweisen. Außerdem kann der Nutzer die Nachricht auch lediglich der Ansicht "Sonstige" zuweisen, falls die Nachricht nur allgemein mit Auktionen zu tun hat.

Dazu ist im unteren Bereich der Seite eine Auswahlliste LST2 vorgesehen. Zur Auswahl wird bevorzugt eine Liste LST2 mit bestehenden Auktionen A1, A2, A3 usw. und mit anklickbaren Radio-Buttons angezeigt. Wird für eine Nachricht oder für mehrere Nachrichten per Radio-Button eine Auktion ausgewählt, so erfolgt die Zuordnung durch Mausklick auf den Button ZO "zuordnen". Es können mehrere Nachrichten gleichzeitig einer Auktion zugewiesen werden. Das System führt die Zuweisungen entsprechend aus. Dabei werden auf der "Nachricht(en) einer Auktion hinzufügen" - Seite keine Erfolgsmeldungen angezeigt. Denn bevorzugt werden die Erfolgsmeldungen nur auf denjenigen Seiten angezeigt, auf denen das Zuweisen initiiert wurde, wie z.B. über das Pulldown "Aktionen" (s. Fig. 2 oder 3) mit der Auswahl "einer Auktion hinzufügen".

Auf der in der Figur 5 dargestellten Seite ist auch ein oberer Bereich zu sehen, der es dem Nutzer ermöglicht, eine neue Auktion in seinem Konto des E-Mail-Dienstes ("maily@web.de") anzulegen und die Nachrichten dieser Auktion zuweisen. Die Überschrift der dafür vorgesehenen Funktions-Box lautet: "Neue Auktion anlegen".

Die Box besteht aus einem Eingabefeld für die Artikelnummer (vergl. NR in der Fig. 3), zwei Radiobuttons zur Wahl zwischen "Kaufen"- (Standardauswahl) oder "Verkaufen" und einem "Prüfen"-Button PRF.

Zunächst gibt der Nutzer zu der gewünschten Auktion die Artikelnummer ein und klickt den "Prüfen"-Button PRF. Dadurch startet das E-Mail-System bei dem Auktions-Dienst (z.B. Ebay) etwa durch http-Zugriff eine Abfrage um zu prüfen, ob diese Artikelnummer dort existiert. Ist dies der Fall, so wird die dazugehörige Artikelbezeichnung (s. TI in Fig. 3) abgefragt.

Ist die Artikelnummer nicht vorhanden, so wird oben auf der Seite eine Fehlermeldung angezeigt, wie z.B. "Artikelnummer unbekannt - Bitte überprüfen Sie Ihre Eingabe!".

Konnte aber die Artikelbezeichnung abgefragt werden, so wird auf der Folgeseite in einer Box die Artikelnummer und Artikelbezeichnung mit einem "Zuweisen"-Button angezeigt (nicht dargestellt). Hier kann der Nutzer die Angaben bestätigen. Erst durch Klicken dieses Buttons werden die Nachrichten entsprechend markiert und ggf. in den Ordner "Auktionsarchiv" verschoben.

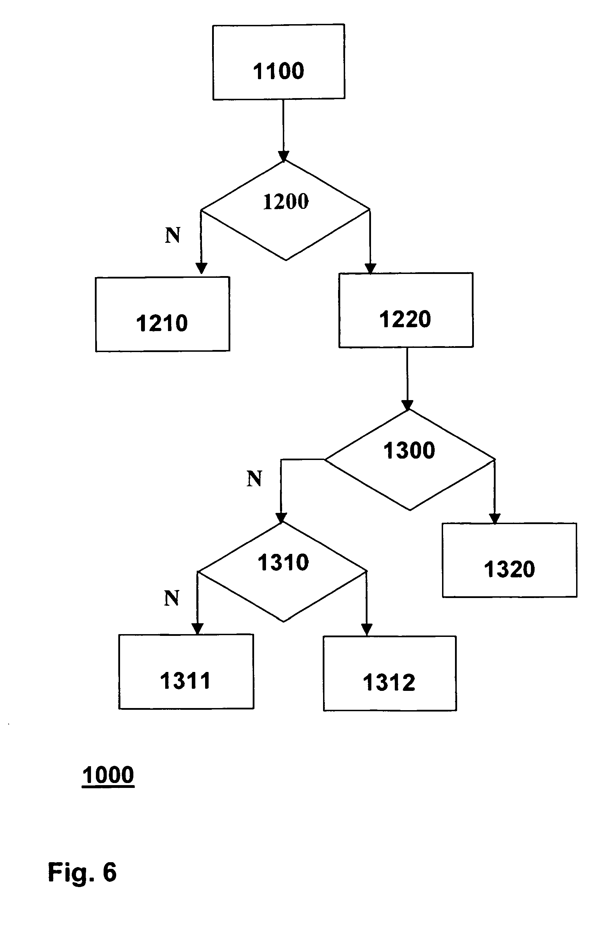

In der Figur 6 wird das von dem E-Mail-System ausgeführte Verfahren 1000 in Form eines Flussdiagramms mit den Schritten 1100 bis 1312 dargestellt. Bei der Beschreibung wird auch auf Systemkomponenten und -funktionen Bezug genommen, die in den vorhergehenden Figuren dargestellt sind:
Zunächst wird im Schritt 1110 dem Nutzer ein Nutzer-Konto zugewiesen. Dieser Schritt braucht lediglich einmal bei der Registrierung des Nutzers durchgeführt zu werden. Im Schritt 1200 wird dann geprüft, ob der Nutzer den Auktionsmanager aktiviert hat oder nicht. Ist dies nicht der Fall, so wird im Schritt 1210 kein Auktionsarchiv angelegt oder zumindest vom System nicht verwaltet. Somit werden alle eingehenden E-Mails nach der herkömmlichen Art in die bestehenden Ordner eingeordnet. Wird jedoch im Schritt 1200 festgestellt, dass der Nutzer den Auktionsmanager aktiviert hat, so legt das System im Schritt 1220 den Dienste-Ordner "Auktionsarchiv" (siehe AA in Fig. 1) an und aktiviert auch die Identifizierung von Auktions-E-Mails. Außerdem wird die Ansicht "Meine Auktionen" (s. MA in Fig. 2 und 3) aktiviert.

Im anschließenden Schritt 1300 wird aber zunächst geprüft, ob der Nutzer Filterregeln für die eingehenden E-Mails definiert hat. Ist dies nicht der Fall, so werden alle eingehenden E-Mails in den Schritten 1310 und 1311 bzw. 1312 dahingehend geprüft, ob sie Auktions-E-Mails sind, und entsprechend zugeordnet. Die Prüfung erfolgt im Schritt 1310 anhand der Absender-Adresse der jeweils eingehenden E-Mail und zusätzlich durch Prüfung der IP-Adresse des sendenden Servers des Auktions-Dienstes. Zeigen beide Kriterien an, dass die E-Mail von dem Auktions-Dienst stammt, so wird im Schritt 1312 die E-Mail in das Auktionsarchiv eingeordnet; andernfalls im Schritt 1311 in den Ordner "Unbekannnt".

Gibt es jedoch mindestens eine vom Nutzer bestimmte Filterregel, so wird dies im Schritt 1300 festgestellt und anschließend im Schritt 1320 umgesetzt. Das bedeutet, dass im Schritt 1320 die eingehende E-Mail entsprechend der Filterregel behandelt bzw. zugeordnet wird. Insbesondere wird die jeweils eingehende E-Mail entsprechend den Vorgaben des Nutzers in den gewünschten Ordner eingeordnet.

Nachfolgend werden noch einige Erläuterungen zu den obigen Ausführungen nach den Figuren 1 bis 6 gemacht, um die Einsatzmöglichkeiten und Vorteile Erfindung noch weiter zu verdeutlichen:
Mit Verweis insbesondere auf die Figuren 2 und 3 sei angemerkt, dass das "Aktionen"-Pulldown noch den zusätzlichen Eintrag "einer Auktion hinzufügen" umfasst. Damit wird dem Nutzer bereits auf der Ansichtseite angeboten, eine neue Auktion anzulegen und die Nachricht dieser Auktion zuzuweisen oder die Nachricht einer bestehenden Auktion aus einer Liste oder dem View "Sonstige" zuzuweisen. Die Nachricht wird automatisch ins "Auktionsarchiv" verschoben. Die Bestätigung "Nachricht zu Meine Auktionen zuweisen war erfolgreich!" wird in derselben Standard-Ordneransicht angezeigt, in der die verschobene Nachricht nicht mehr angezeigt wird.

Das "Ablegen in"-Pulldown erhält den neuen Eintrag "Auktionsarchiv" zwischen "Unbekannt" und "Unerwünscht". Wird der Eintrag ausgewählt, muss der Nutzer auf der "Nachricht einer Auktion zuweisen"-Seite die Nachricht einer Auktion oder dem View "Sonstige" zuweisen. Daraufhin wird die Nachricht entsprechend markiert und in den "Auktionsarchiv"-Ordner verschoben. Der Nutzer erhält die Bestätigung "Verschieben nach Ordner Auktionsarchiv erfolgreich!" auf derselben Standard-Ordneransicht, die besagte Nachricht in der Liste nicht mehr anzeigt.

Mit besonderem Verweis auf die Figur 4 wird angemerkt, dass die Standardansicht der "Nachricht lesen"-Seite immer dann angezeigt wird, wenn eine Nachricht aus einer Standard-Ordneransicht heraus oder dem View "Sonstige" zum Lesen ausgewählt wird.

Auf der "Nachricht lesen"-Seite kann das Pulldown "Ablegen in" ebenfalls angezeigt und um den Eintrag "Auktionsarchiv" ergänzt werden. Die Befehle verhalten sich wie auch in der zuvor beschriebenen Standard-Ordneransicht. Die Bestätigung "Verschieben nach Ordner Auktionsarchiv erfolgreich!" wird auf der "Nachricht lesen"-Standardseite angezeigt, die jetzt die nächste Nachricht aus dem Ordner bzw. "Sonstige"-View anzeigt.

Allgemein wird noch vermerkt, dass der Nutzer auf die Auktions-E-Mails sowohl über die Standard-Ordneransicht zugreifen kann wie auch über die vorgestellten Ansichten (sog. Views) "Meine Auktionen" mit den Unteransichten "Kaufen", "Verkaufen" und "Sonstige". In den Views "Kaufen" und "Verkaufen" werden alle Nachrichten einer Auktion in einem Thread zusammengefasst. Nachrichten, die keiner eindeutigen Auktion zugeordnet werden können, sind in der Unteransicht "Sonstige" gelistet.

Nachrichten die als Spam eingestuft werden, sind vorzugsweise von der Zuordnung in den Ordner "Auktionsarchiv" ausgeschlossen. Nachrichten, die auf Grund einer Filterregel in einen anderen Ordner abgelegt werden sollen, werden in den Views angezeigt, aber nicht im "Auktionsarchiv"-Ordner abgelegt.

Der Nutzer kann Nachrichten manuell einer Auktion zuweisen oder als "keine Auktionsnachricht" einstufen. Dabei wird die Nachricht automatisch in bzw. aus dem Ordner "Auktionsarchiv" verschoben.

Ändert der Nutzer den Status einer Auktions-Mail in "keine Auktionsnachricht", wird durch ein Attribut verhindert, dass die Nachricht weiterhin in den Views angezeigt wird. Auch wenn der Nutzer eine Identifikation aller Auktions-Mail im Postfach initiiert.

Der Nutzer kann bei eingeschaltetem Auktionsmanager auf Knopfdruck automatisch alle Auktions-Mails in seinem Postfach identifizieren und in den "Auktionsarchiv"-Ordner verschieben lassen.

Wird die Funktion abgeschaltet, bleibt der "Auktionsarchiv"-Ordner samt Inhalt bestehen. Nachrichten werden nicht mehr als Auktions-Mails markiert und "Meine Auktionen"-Views stehen nicht mehr zur Verfügung.

Die Erfindung wurde anhand speziell auf Online-Auktionen fokussierte Anwendungen beschrieben, ist aber nicht auf diese Anwendung beschränkt. Vielmehr kann die Erfindung in den unterschiedlichsten Bereichen eingesetzt werden, wo immer Internet-Dienste Informations- und/oder Benachrichtigungs-E-Mails an Nutzer-Konten eines E-Mail-Dienstes schicken.

## Patentansprüche

1. verfahren (1000) zum Bereitstellen und Betreiben eines E-Mail-Dienstes (FM), bei dem Internet-Nutzern in einem E-Mail-System mit Ordner-Struktur jeweils ein Nutzer-Konto (NK) mit mehreren Ordnern (PE, PE1, PE2, ...) zugeordnet wird (Schritt 1100), bei dem für den Fall, dass der jeweilige Nutzer einen weiteren Internet-Dienst (EB) nutzt, welcher Informations-E-Mails (A11, A12 ...) an das Nutzer-Konto (UK) des E-Mail-Dienstes (FM) sendet, von dem E-Mail-System ein Dienste-Ordner (AA) bereitgestellt wird (Schritt 1220), und bei dem zumindest die von dem weiteren Internet-Dienst (EB) eingehenden Informations-E-Mails (A11, A12 ...) in Abhängigkeit mindestens eines vorgebbaren Kriteriums (ADR, IPA) von dem E-Mail-System automatisch geprüft werden (Schritt 1310) und, falls das mindestens eine Kriterium (ADR, IPA) erfüllt wird, diesem Dienste-Ordner (AA) zugewiesen werden (Schritt 1312), wobei die von dem Internet-Dienst (EB) eingehenden E-Mails (A11, A12 ...) sich auf verschiedene Ereignisse beziehen, und die von dem Internet-Dienst (EB) eingehenden E-Mails entsprechend der Ereignisse gruppiert werden und dem Nutzer in einer entsprechenden Ansicht (MA) angezeigt werden und wobei für den Nutzer eine manuelle Zuweisungsfunktion bereitgestellt wird, mit der die nicht in der Ansicht (MA) angezeigten E-Mails manuell einem der bereits erfassten Ereignisse (A1, A2) zugewiesen werden können, wobei dem Nutzer eine zweite Übersicht (LST2) angezeigt wird, in der die erfassten Ereignisse (A1, A2) aufgelistet werden.

2. Verfahren (1000) nach Anspruch 1, bei dem der jeweilige Nutzer einen Auktions-Dienst nutzt, welcher Informations-E-Mails (A11, A12 ...) an das Nutzer-Konto (UK) des E-Mail-Dienstes (FM) sendet.

3. Verfahren (1000) nach Anspruch 1, bei dem zumindest die von dem weiteren Internet-Dienst (EB) eingehenden Informations-E-Mails (A11, A12 ...) mittels Prüfung der Kopfdaten der eingehenden E-Mails von dem E-Mail-System automatisch geprüft werden (Schritt 1310).

4. Verfahren (1000) nach Anspruch 1, bei dem für den Fall, dass der weitere Internet-Dienst (EB) die Informations-E-Mails über einen Server mit einer fest zugeordneten Internet-Adresse (IPA) sendet, jeweils zwei Kriterien geprüft werden (Schritt 1310), indem geprüft wird, ob eine für das Nutzer-Konto (NK) eingehende E-Mail (Aly) die Absender-Adresse (ADR) des weiteren Internet-Dienstes (EB) trägt und zudem geprüft wird, ob diese E-Mail (Aly) auch von dem Server mit dieser Internet-Adresse (IPA) stammt, wodurch erkannt wird, ob es sich um eine Informations-E-Mail (Aly) des Internet-Dienstes handelt (Schritt 1312).

5. Verfahren (1000) nach Anspruch 1 oder 4, bei dem für den Fall, dass mindestens eine Filterregel zum Zuordnen der eingehenden E-Mails vom Nutzer vorgegeben wird, die jeweils eingehende E-Mail (Aly) anhand dieser Filterregel geprüft wird (Schritt 1300) und falls die Filterregel auf die eingehende E-Mail (Aly) anwendbar ist, diese E-Mail nicht dem Dienste-Ordner (AA) zugewiesen wird, sondern einem der Ordner (PE1) entsprechend der Filterregel zugewiesen wird (Schritt 1320).

6. Verfahren nach Anspruch 5, bei dem die entsprechend der Filterregel dem Ordner (PE1) zugewiesene E-Mail (Aly) auch anhand der vorgebbaren Kriterien (ADR, IPA) geprüft wird und, falls das Kriterium zutrifft, diese E-Mail (Aly) als eine dem Dienste-Ordner (AA) zuweisbare E-Mail markiert wird.

7. Verfahren nach Anspruch 6, bei dem die dem Dienste-Ordner (AA) zugewiesenen E-Mails (A12) und die als dem Dienste-Ordner (AA) zuweisbar markierten E-Mails (A11, A13) in einer gemeinsamen Ansicht (MA) dem Nutzer angezeigt werden.

8. Verfahren nach Anspruch 1 oder 7, bei dem die von dem Internet-Dienst (EB) eingehenden E-Mails (A11, A12 ...) sich auf vom dem Dienst durchgeführte Auktionen (A1, A2, A3 ...) beziehen.

9. Verfahren nach Anspruch 1 oder 7, bei dem die vom dem Internet-Dienst (EB) eingehenden E-Mails entsprechend der Ereignisse gruppiert werden und dem Nutzer in Form von Threads, angezeigt werden.

10. Verfahren nach Anspruch 1 oder 7, bei dem für die verschiedenen Ereignisse, jeweils zumindest eine Information (TI, NR) von dem Internet-Dienst (EB) abgefragt wird und in der Ansicht (MA) dem Nutzer angezeigt wird.

11. Verfahren nach Anspruch 10, bei dem für die verschiedenen Auktionen (A1, A2, A3 ...) jeweils zumindest eine Information (TI, NR) von dem Internet-Dienst (EB) abgefragt wird und in der Ansicht (MA) dem Nutzer angezeigt wird.

12. Verfahren nach Anspruch 10, bei dem für den Nutzer in dem E-Mail-Dienst (FM) eine Suchfunktion (SR) bereit gestellt wird, und bei dem für eine Suche einzelner E-Mails die gruppierten Informations-E-Mails nach den abgefragten Informationen (TI, NR) indiziert werden.

13. Verfahren nach Anspruch 10, bei dem für den Nutzer in dem E-Mail-Dienst (FM) eine Benachrichtigungsfunktion bereit gestellt wird, und bei dem der Nutzer bei Eingang einer Informations-E-Mail benachrichtigt wird, indem auch die zu dem Ereignis, auf das sich die jeweilige E-Mail bezieht, die abgefragten Informationen (TI, NR) zumindest in Teilen mitgesendet werden.

14. Verfahren nach Anspruch 13, bei dem für den Nutzer in dem E-Mail-Dienst (FM) eine Mobilfunk-Benachrichtigungsfunktion mittels Kurznachrichten bereitgestellt wird.

15. Verfahren nach Anspruch 1 oder 7, bei dem für den Fall, dass von dem Nutzer eine einzelne E-Mail (Aly), die sich auf eines der Ereignisse(A1) bezieht, gelesen wird, eine erste Übersicht (LST1) über die anderen E-Mails (Alx, Alz) angezeigt wird, die sich auch auf dieses Ereignis (A1) beziehen.

16. E-Mail-System mit Ordner-Struktur und Mitteln zur Durchführung aller Schritte des Verfahrens nach einem der Ansprüche 1 bis 15.

## Claims

1. Method (1000) for providing and operating an e-mail service (FM), in which, in an e-mail system with a folder structure, Internet users are each assigned a user account (NK) with several folders (PE, PE1, PE2, ...) (step 1100), in which, in the case that the respective user uses a further Internet service (EB) which sends information e-mails (A11, A12 ...) to the user account (UK) of the e-mail service (FM), a services folder (AA) is provided by the e-mail system (step 1220), and in which at least the information e-mails (A11, A12 ...) arriving from the further Internet service (EB) are automatically inspected by the e-mail system in dependence on at least one specifiable criterion (ADR, IPA) (step 1310) and, if the at least one criterion (ADR, IPA) is met, are allocated to this services folder (AA) (step 1312), wherein the e-mails (A11, A12 ...) arriving from the Internet service (EB) concern different events, and the e-mails arriving from the Internet service (EB) are grouped according to the events and are displayed to the user in a corresponding view (MA) and wherein a manual allocation function is provided for the user, with which the e-mails not displayed in the view (MA) can be manually allocated to one of the already detected events (A1, A2), wherein a second overview (LST2) is displayed to the user, in which the detected events (A1, A2) are itemized.

2. Method (1000) according to claim 1, in which the respective user uses an auction service which sends information e-mails (A11, A12 ...) to the user account (UK) of the e-mail service (FM).

3. Method (1000) according to claim 1, in which at least the information e-mails (A11, A12 ...) arriving from the further Internet service (EB) are automatically inspected by the e-mail system by means of inspection of the header data of the arriving e-mails (step 1310).

4. Method (1000) according to claim 1, in which, in the case that the further Internet service (EB) sends the information e-mails via a server with a static Internet address (IPA), two criteria are inspected in each case (step 1310), in that it is inspected whether an e-mail (Aly) arriving for the user account (NK) bears the sender address (ADR) of the further Internet service (EB) and it is additionally inspected whether this e-mail (Aly) also comes from the server with this Internet address (IPA), whereby it can be recognized whether it is an information e-mail (Aly) of the Internet service (step 1312).

5. Method (1000) according to claim 1 or 4, in which, in the case that at least one filtering rule is specified by the user to assign the arriving e-mails, the respective arriving e-mail (Aly) is inspected on the basis of this filtering rule (step 1300) and, in the case that the filtering rule is applicable to the arriving e-mail (Aly), this e-mail is not allocated to the services folder (AA), but rather is allocated to a folder (PE1) in accordance with the filtering rule (step 1320).

6. Method according to claim 5, in which the e-mail (Aly) allocated to the folder (PE1) in accordance with the filtering rule is also inspected on the basis of the specifiable criteria (ADR, IPA) and, if the criterion is applicable, this e-mail (Aly) is marked as an e-mail that can be allocated to the services folder (AA).

7. Method according to claim 6, in which the e-mails (A12) allocated to the services folder (AA) and the e-mails (A11, A13) marked as being able to be allocated to the services folder (AA) are displayed to the user in a common view (MA).

8. Method according to claim 1 or 7, in which the e-mails (A11, A12 ...) arriving from the Internet service (EE) concern auctions (A1, A2, A3...) carried out by the service.

9. Method according to claim 1 or 7, in which the e-mails arriving from the Internet service (EB) are grouped according to the events and are displayed to the user in the form of threads.

10. Method according to claim 1 or 7, in which, for the different events, in each case at least one item of information (TI, NR) is retrieved from the Internet service (EB) and is displayed to the user in the view (MA).

11. Method according to claim 10, in which, for the different auctions (A1, A2, A3 ...) in each case at least one item of information (TI, NR) is retrieved from the Internet service (EB) and is displayed to the user in the view (MA).

12. Method according to claim 10, in which a search function (SR) is provided for the user in the e-mail service (FM), and in which, for a search of individual e-mails, the grouped information e-mails are indexed according to the retrieved items of information (TI, NR).

13. Method according to claim 10, in which a notification function is provided for the user in the e-mail service (FM), and in which the user is notified when an information e-mail arrives, in that the items of information (TI, NR) retrieved relating to the event which the respective e-mail concerns are also sent with it at least in parts.

14. Method according to claim 13, in which a mobile communication notification function is provided for the user in the e-mail service (FM) by means of text messages.

15. Method according to claim 1 or 7, in which in the case that an individual e-mail (Aly) which concerns one of the events (A1) is read by the user, a first overview (LST1) of the other e-mails (Alx, Alz) which also concern this event (A1) is displayed.

16. E-Mail system with a folder structure and means for carrying out all of the steps of the method according to one of claims 1 to 15.

## Revendications

1. Procédé (1000) de mise à disposition et d'exploitation d'un service d'émail (FM), dans lequel un compte d'utilisateur (NK) avec plusieurs dossiers (PE, PE1, PE2, ... ) est respectivement associé à des utilisateurs d'Internet dans un système d' email avec une structure de dossiers (étape 1100), dans lequel dans le cas dans lequel l'utilisateur respectif utilise un service Internent (EB) supplémentaire envoyant des emails d'information (A11, A12 ... ) au compte d'utilisateur (UK) du service d'email (FM), un dossier de service (AA) est mis à disposition par le système d'email (étape 1220) et dans lequel au moins les emails d'information (A11, A12 ...) envoyés par le service Internet (EB) supplémentaire sont automatiquement contrôlés par le système d'email en fonction d'au moins un critère (ADR, IPA) prédéfinissable (étape 1310) et, dans le cas dans lequel l'au moins un critère (ADR, IPA) est rempli, celui-ci est attribué à un dossier de service (AA) (étape 1312), les emails (A11, A12 ...) envoyés par le service Internet (EB) se réfèrent à différents événements et les emails envoyés par le service Internet (EB) sont regroupés en fonction des événements et affichés à l'utilisateur dans une vue (MA) correspondante et dans lequel une fonction d'attribution manuelle est mise à disposition de l'utilisateur, ladite fonction permettant d'attribuer manuellement les emails non affichés dans la vue (MA) à un des événements (A1, A2) déjà détectés, une deuxième vue d'ensemble (LST2) étant affichée à l'utilisateur dans laquelle les événements (A1, A2) détectés sont présentés sous forme de liste.

2. Procédé (1000) selon la revendication 1, dans lequel l'utilisateur respectif utilise un service de vente aux enchères envoyant des emails d'information (A11, A12 ...) au compte d'utilisateur (UK) du service d'email (FM).

3. Procédé (1000) selon la revendication 1, dans lequel au moins les emails d'information (A11, A12 ... ) envoyés par le service Internet (EB) supplémentaire sont automatiquement contrôlés par contrôle des données d'entête des emails envoyés par le système d'email (étape 1310).

4. Procédé (1000) selon la revendication 1, dans lequel dans le cas dans lequel le service Internet (EB) supplémentaire envoie les emails d'information via un serveur avec une adresse Internet (IPA) associée de façon permanente, respectivement deux critères sont contrôlés (étape 1310), sachant que l'on contrôle si un email (Aly) entrant pour le compte d'utilisateur (NK) porte également l'adresse de l'expéditeur (ADR) du service Internet (EH) supplémentaire et que l'on contrôle en outre si cet email (Aly) provient également du serveur avec cette adresse Internet (IPA)), permettant ainsi de reconnaître s'il s'agit d'un email d'information (Aly) du service Internet (étape 1312).

5. Procédé (1000) selon la revendication 1 ou 4, dans lequel dans le cas dans lequel au moins une règle de filtre est prédéfinie par l'utilisateur en association avec les emails entrants, l'email (Aly) entrant respectivement est contrôlé à l'aide de cette règle de filtre (étape 1300) et si la règle de filtre peut être appliquée à l'email (Aly) entrant, cet email n'est pas attribué au dossier de service (AA) mais associé au dossier (PE1) correspondant à la règle de filtre (étape 1320).

6. Procédé selon la revendication 5, dans lequel l'email (Aly) attribué au dossier (PE1) correspondant à la règle de filtre est également contrôlé à l'aide de critères (ADR, IPA) prédéfinissables et si le critère est attribué, cet email (Aly) est marqué comme un email pouvant être attribué au dossier de service (AA).

7. Procédé selon la revendication 6, dans lequel les emails (A12) attribués au dossier de service (AA) et les emails (A11, A13) marqués comme attribuables au dossier de service (AA) sont affichés à l'utilisateur dans une vue (MA) commune.

8. Procédé selon la revendication 1 ou 7, dans lequel les emails (A11, A12 ...) envoyés par le service Internet (EB) se réfèrent aux ventes aux enchères (A1, A2, A3 ...) effectuées par le service.

9. Procédé selon la revendication 1 ou 7, dans lequel les emails envoyés par le service Internet (EB) sont regroupés en fonction des événements et affichés à l'utilisateur sous la forme de fils.

10. Procédé selon la revendication 1 ou 7, dans lequel pour les différents événements, respectivement au moins une information (TI, NR) est extraite par le service Internet (EB) et affichée à l'utilisateur dans la vue (MA).

11. Procédé selon la revendication 10, dans lequel pour les différentes ventes aux enchères (A1, A2, A3 ...), respectivement au moins une information (TI, NR) est extraite par le service Internet (EB) et affichée à l'utilisateur dans la vue (MA).

12. Procédé selon la revendication 10, dans lequel une fonction de recherche (SR) est mise à la disposition de l'utilisateur dans le service d'email (FM) et dans lequel pour une recherche d'emails individuels, les emails d'information groupés sont indexés en fonction des informations (TI, NR) extraites.

13. Procédé selon la revendication 10, dans lequel pour l'utilisateur dans le service d'email (FM), une fonction d'avertissement est mise à disposition et dans lequel l'utilisateur est averti lors de l'envoi d'un email d'information, en ce que les informations (TI, NR) extraites relatives à l'événement et auxquelles l'email respectif se réfère sont envoyées concomitamment au moins en différentes parties.

14. Procédé selon la revendication 13, dans lequel une fonction d'avertissement par téléphonie mobile est mise à disposition de l'utilisateur dans le service d'email (FM) par le biais de SMS.

15. Procédé selon la revendication 1 ou 7, dans lequel dans le cas dans lequel un email (Aly) individuel se référant à un des événements (A1) est lu par l'utilisateur, une première vue d'ensemble (LST1) est affichée via les autres emails (Alx, Alz) faisant référence à cet événement (Al).

16. Système d'email avec une structure de dossiers et des moyens de mise en oeuvre de toutes les étapes du procédé selon l'une quelconque des revendications 1 à 15.
